# EUROPÄISCHE PATENTSCHRIFT

(11) **EP 3 694 687 B1**
(45) Veröffentlichungstag und Bekanntmachung des Hinweises auf die Patenterteilung: **11.10.2023**
(21) Anmeldenummer: 18762235.2
(22) Anmeldetag: 19.08.2018
(51) Int. Cl.: B25J 9/00

(54) **SYSTEM ZUR MUSKELKRAFTUNTERSTÜTZUNG**
SYSTEM FOR ASSISTING MUSCLE STRENGTH
SYSTÈME POUR SOUTENIR LA FORCE MUSCULAIRE

(30) Priorität: 10.10.2017 DE 102017123574
(43) Veröffentlichungstag der Anmeldung: 19.08.2020
(73) Patentinhaber: Exoiq GmbH, 21109 Hamburg (DE)
(72) Erfinder: OTTEN, Bernward, 20535 Hamburg (DE); WEIDNER, Robert, 29581 Bohlsen (DE); WULFSBERGER, Jens Peter, 22607 Hamburg (DE)
(74) Vertreter: Koplin, Moritz
(86) Internationale Anmeldenummer: PCT/EP2018/072375
(87) Internationale Veröffentlichungsnummer: WO 2019/072444

(56) Entgegenhaltungen:
- WO-A1-2014/195373
- WO-A1-2017/127683
- US-A1- 2009 210 093
- HESSINGER MARKUS ET AL: "Hybrid position/force control of an upper-limb exoskeleton for assisted drilling", 2017 IEEE/RSJ INTERNATIONAL CONFERENCE ON INTELLIGENT ROBOTS AND SYSTEMS (IROS), IEEE, 24. September 2017 (2017-09-24), Seiten 1824-1829, XP033266148, DOI: 10.1109/IROS.2017.8205997 [gefunden am 2017-12-13]

## Beschreibung

### GEBIET

Die vorliegende Erfindung bezieht sich auf ein System und ein Verfahren zur Muskelkraftunterstützung.

Insbesondere bezieht sich die vorliegende Erfindung auf ein System gemäß dem Oberbegriff des Anspruchs 1 und ein Verfahren gemäß dem Oberbegriff des Anspruchs 10.

### HINTERGRUND

Aus dem Stand der Technik sind zahlreiche technische Systeme bekannt, die es erlauben, menschliche Bewegungen zu unterstützen. Die Unterstützung kann dabei bspw. darauf abzielen, die Qualität manueller Arbeitsschritte, die Arbeitsplatz-Ergonomie oder die Mobilität von Personen mit Muskel-Skelett-Erkrankungen zu verbessern. Besagte Systeme adressieren dabei entweder den ganzen Körper oder Körperbereiche, bspw. die unteren Extremitäten, die oberen Extremitäten oder den Rücken, und basieren oftmals auf Exoskeletten.

Aus dem Artikel "Hybrid Position/Force Control of an Upper-Limb Exoskeleton for Assisted Drilling" von Markus Hessinger at al., 2017 IEEE/RSJ INTERNATIONAL CONFERENCE ON INTELLIGENT ROBOTS AND SYSTEMS, IEEE, auf den sich der Oberbegriff der unabhängigen Ansprüche 1 und 10 stützt, ist ein Exoskelett bekannt, das auf Basis einer an einer Bohrerspitze gemessenen Kraft gesteuert wird.

Aus der WO2014/195373 A1 ist ein Exoskelett mit einem Aktuator bekannt, welcher durch die Bedienperson aktivierbar ist, z. B. mittels eines Schalttasters an einem Handteil. Bei einem aktivierten Aktuator sind passive Bewegungshilfen zur Unterstützung der Lastaufnahme und zur Vermeidung von Verletzungen der Bedienperson manuell oder automatisch aktivierbar. Die Bedienperson kann bei einem jeweiligen Bedarf den Aktuator gezielt aktivieren, sodass sie bei einem nicht aktivierten Aktuator eine ausreichend große Bewegungsfreiheit und Flexibilität beim Umsetzen von Lasten hat.

### ZUSAMMENFASSUNG

Exoskelette müssen individuell an den jeweiligen Benutzer und die auszuführende Aufgabe angepasst sein, um ihr volles Potenzial entfalten zu können. Dabei ist neben der Berücksichtigung der Anthropometrie vor allem die Anpassung der während der Verwendung des Systems bereitgestellten Unterstützungskraft an den tatsächlichen Bedarf wichtig, da dieser von unterschiedlichsten Aspekten, z. B. dem Werkzeuggewicht, der Körperposition, der Dauer der Tätigkeit und natürlich den physiologischen Voraussetzungen (insb. Krafteigenschaften während der Bewegungen) abhängt. Wichtig ist ferner der richtige Moment und die Dauer der Unterstützung, da zu viel Unterstützung bei natürlichen und gesunden Belastungsfällen zum Abbau von Muskeln führen kann.

Die Erfindung bereichert diesbezüglich den Stand der Technik, als die Steuerung der während der Verwendung des Systems durch das Exoskelett bereitgestellten Unterstützungskraft ohne ein Innehalten oder Abbrechen einer Tätigkeit, für deren Bewältigung die Unterstützungskraft bereitgestellt werden soll, erfolgen kann, indem Bedienelemente/Sensoren einer Steuereinheit mit Kontakt zur Hand bzw. in Fingerreichweite angeordnet werden und/oder die Steuereinheit ein automatisiertes Anpassen der Unterstützungskraft auf Basis von Daten hinsichtlich der Werkzeugnutzung ermöglicht.

Ein erfindungsgemäßes System zur Muskelkraftunterstützung umfasst ein Exoskelett, welches eingerichtet ist, während der Verwendung des Systems an den Körper eines Menschen angebunden zu sein, und ein Werkzeug, welches frei von mechanischen Verbindungen zum Exoskelett ist und eingerichtet ist, während der Verwendung des Systems durch den Menschen geführt zu werden, wobei das Werkzeug eine Steuereinheit zur Steuerung einer während der Verwendung des Systems durch das Exoskelett bereitgestellten Unterstützungskraft aufweist.

Dabei ist unter dem Begriff "Exoskelett", er in der Beschreibung und den Ansprüchen verwendet wird, insbesondere eine aus mehreren rigiden Bauteilen gebildete Struktur zu verstehen, welche eine Stütz-, Halte- oder Kraftübertragungsfunktion hinsichtlich des menschlichen Körpers ermöglicht. Ferner ist unter dem Begriff "angebunden", er in der Beschreibung und den Ansprüchen verwendet wird, insbesondere ein Kontaktieren zu verstehen, bei dem auf die Arme und/oder die Wirbelsäule wirkende Kräfte umgeleitet werden können, bspw. indem das System im Arm-/Schulter-/Brustbereich und im Hüft-/Schambeinbereich anliegt bzw. diesen (teilweise) umschließt oder umgreift.

Zudem ist unter dem Begriff "Werkzeug", er in der Beschreibung und den Ansprüchen verwendet wird, insbesondere ein Gerät zu verstehen, welches dazu eingerichtet ist, vom Benutzer zum Verrichten einer Tätigkeit (d. h. dem Einwirken auf ein Objekt oder ein Lebewesen, oder dem Ausführen einer Bewegung) in einer oder beiden Händen gehalten zu werden. Ferner ist unter dem Begriff "Steuereinheit", er in der Beschreibung und den Ansprüchen verwendet wird, insbesondere ein Mikrocontroller oder eine Schaltung zu verstehen, die dazu eingerichtet ist, auf Basis von Sensorsignalen Steuerbefehle zu erzeugen, wobei die Steuerbefehle den Zustand bzw. das Verhalten des Exoskeletts steuern.

Vorzugsweise ist die Steuereinheit mit einer Sensoreinheit zur Messung einer Relativposition, -ausrichtung, -geschwindigkeit, und/oder -beschleunigung zwischen dem Werkzeug und dem Exoskelett, und/oder einer Position, Ausrichtung, Geschwindigkeit und/oder Beschleunigung des Werkzeugs in einem ortsfesten Koordinatensystem verbunden, und die Unterstützungskraft wird auf Basis der gemessenen Werte gesteuert.

Durch das Bestimmen der Position, Ausrichtung Geschwindigkeit und/oder Beschleunigung des Werkzeugs kann auf die Position und Ausrichtung, sowie auf die (zu erwartende) Belastung des Armes oder der Arme und (mittels eines kontinuierlichen Überwachens) auf die Dauer der Tätigkeit geschlossen werden und die Unterstützungskraft dementsprechend angepasst werden. Bspw. kann die Unterstützungskraft im Laufe der Tätigkeit gesteigert werden oder die Unterstützungskraft bei Einnahme bestimmter Positionen und/oder Ausrichtungen vorrübergehend erhöht werden, um Überlastungen zu vermeiden.

Vorzugsweise ist die Steuereinheit eingerichtet, die Unterstützungskraft zu steuern, während das Werkzeug in Verwendung ist, insbesondere wenn ein Motor des Werkzeugs in Betrieb ist.

Die Unterstützungskraft kann somit in Arbeitspausen, in denen keine, Überlastungen hervorrufende Bewegungen zu erwarten sind, reduziert werden.

Vorzugsweise weist die Steuereinheit einen Kraftsensor auf und wird die Unterstützungskraft auf Basis von Messwerten des Kraftsensors gesteuert.

Dadurch können drohende Überlastungsszenarien erkannt und vermieden werden.

Vorzugsweise ist der Kraftsensor in einen Taster integriert und wird die Unterstützungskraft auf Basis von Messwerten des Kraftsensors gesteuert, wenn der Taster gedrückt wird.

Dadurch kann bspw. auf die durch den Benutzer beim Führen des Werkzeugs ausgeübte Kraft geschlossen werden, wodurch Anspannungsspitzen erkannt und durch Bereitstellen zusätzlicher Unterstützungskraft abgefedert werden können. Zudem kann der Taster vom Benutzer auch aktiv genutzt werden, um situationsbedingt vorübergehend eine höhere Unterstützungskraft abzurufen.

Vorzugsweise ist die Steuereinheit eingerichtet, einen Betriebszustand des Werkzeugs zu überwachen und die Unterstützungskraft auf Basis des Betriebszustands zu steuern.

Dadurch können bspw. aus einer (Fehl-) Bedienung des Werkzeugs resultierende Anspannungsspitzen erkannt und abgefedert werden.

Vorzugsweise ist die Steuereinheit eingerichtet, die Unterstützungskraft auf Basis einer Leistungsaufnahme des Werkzeugs und/oder durch das Werkzeug erzeugter Kräfte zu steuern.

Bspw. kann die Unterstützungskraft bei einer Vergrößerung der Leistungsaufnahme ebenfalls vergrößert werden, da mit der Vergrößerung der Leistungsaufnahme eine Vergrößerung der Reaktionskräfte zu erwarten ist.

Vorzugsweise ist die Steuereinheit eingerichtet, Steuersignale zur Steuerung der Unterstützungskraft mittels Funk an das Exoskelett zu übertragen.

Dadurch kann das Exoskelett leichter in Kombination mit verschiedenen Werkzeugen benutzt werden. Zudem können bei der Verwendung des Exoskeletts möglicherweise störende Kabel vermieden werden.

Vorzugsweise ist das Exoskelett eingerichtet, ein Einschalt-Signal an das Werkzeug zu übertragen, wenn der Zustand des Exoskeletts eine oder mehrere erste Bedingungen erfüllt und/oder ein Ausschalt-Signal an das Werkzeug zu übertragen, wenn der Zustand des Exoskeletts eine oder mehrere zweite Bedingungen erfüllt.

Bspw. kann das Einschalt-Signal übertragen werden, wenn das Exoskelett in einer Pose ist, in der ein plötzlicher Kraftstoß durch das Exoskelett abgefangen werden kann und zu keiner benutzerseitigen Überlastung führt. Ferner kann das Ausschalt-Signal an das Werkzeug übertragen werden, wenn das Exoskelett an eine Unterstützungsgrenze gelangt, um eine mit dem Überschreiten der Unterstützungsgrenze einhergehende Überlastung zu verhindern.

Ein erfindungsgemäßes Verfahren zur Unterstützung der Muskelkraft, umfasst ein Anbinden eines Exoskeletts an den Körper eines Menschen und ein Führen eines Werkzeugs, welches frei von mechanischen Verbindungen zum Exoskelett ist, durch den Menschen, und ein Übertragen von Signalen zu Steuerung der durch das Exoskelett bereitgestellten Unterstützungskraft vom Werkzeug zu einer Antriebssteuerung oder einem Antrieb des Exoskeletts.

Ferner versteht es sich, dass alle Merkmale (bevorzugter Ausführungsformen) des erfindungsgemäßen Systems auch Merkmale (bevorzugter Ausführungsformen) des erfindungsgemäßen Verfahrens sein können, welches sich auf die Verwendung des erfindungsgemäßen System bezieht, und umgekehrt.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1 eine schematische Ansicht eines ersten Systems, gemäß einer beispielhaften Ausführungsform;
Fig. 1a eine schematische Ansicht einer Abwandlung des ersten Systems, gemäß einer beispielhaften Ausführungsform;
Fig. 2 eine schematische Ansicht eines zweiten Systems, gemäß einer weiteren beispielhaften Ausführungsform;
Fig. 2a eine schematische Ansicht einer Abwandlung des zweiten Systems, gemäß einer beispielhaften Ausführungsform;
Fig. 3a eine schematische Ansicht einer Steuereinheit, gemäß einer beispielhaften Ausführungsform;
Fig. 3b eine schematische Ansicht einer Steuereinheit, gemäß einer weiteren beispielhaften Ausführungsform;
Fig. 4 eine schematische Ansicht eines Werkzeugs und einer mit dem Werkzeug verbindbaren Steuereinheit;
Fig. 5a eine mögliche Abwandlung der in Fig. 1-4 gezeigten Steuereinheiten;
Fig. 5b eine weitere mögliche Abwandlung der in Fig. 1-4 gezeigten Steuereinheiten;
Fig. 5c eine mögliche Verwendung der in Fig. 5a und 5b gezeigten abgewandelten Steuereinheiten;
Fig. 6a eine weitere mögliche Abwandlung der in Fig. 1-4 gezeigten Steuereinheiten;
Fig. 6b eine mögliche Verwendung der in Fig. 6a gezeigten abgewandelten Steuereinheit;

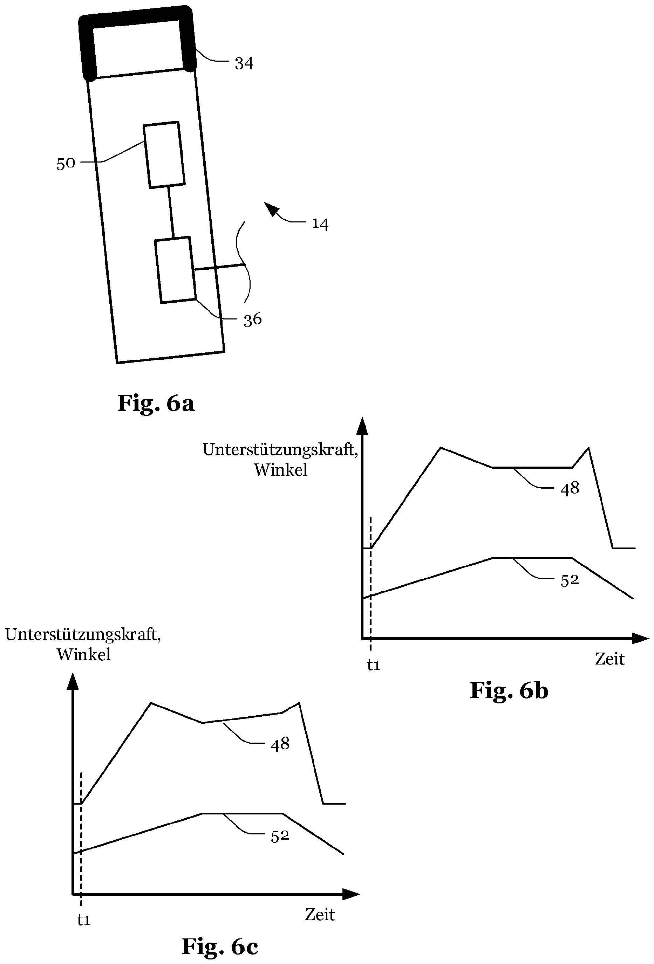

Fig. 6b eine weitere mögliche Verwendung der in Fig. 6a gezeigten abgewandelten Steuereinheit;

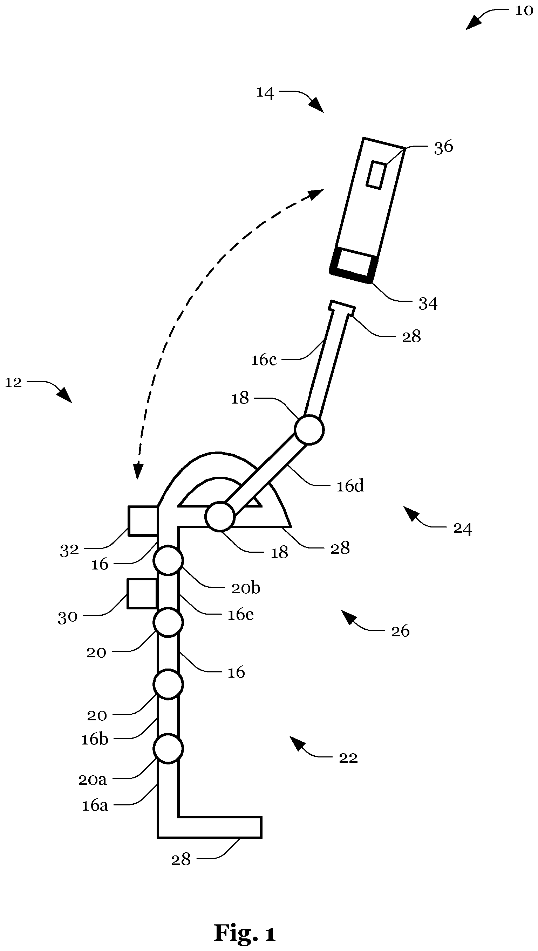

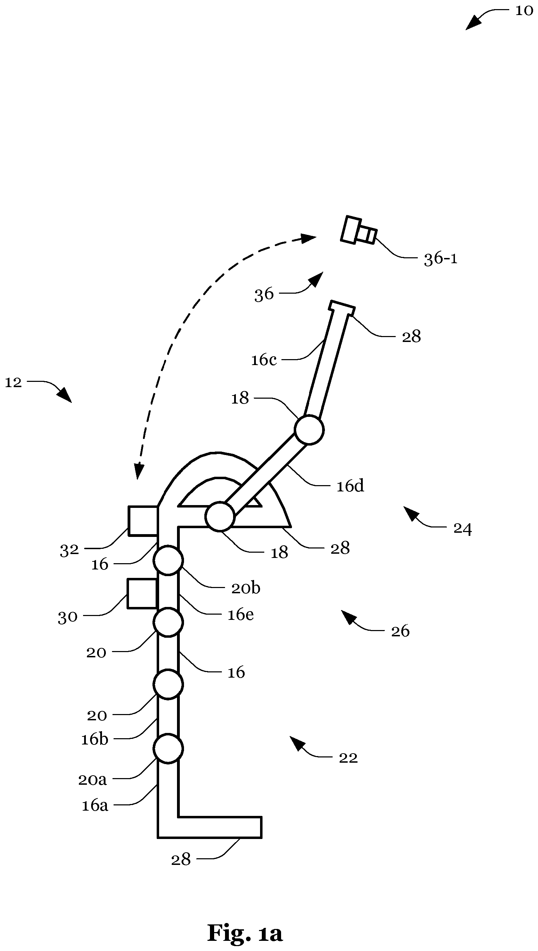

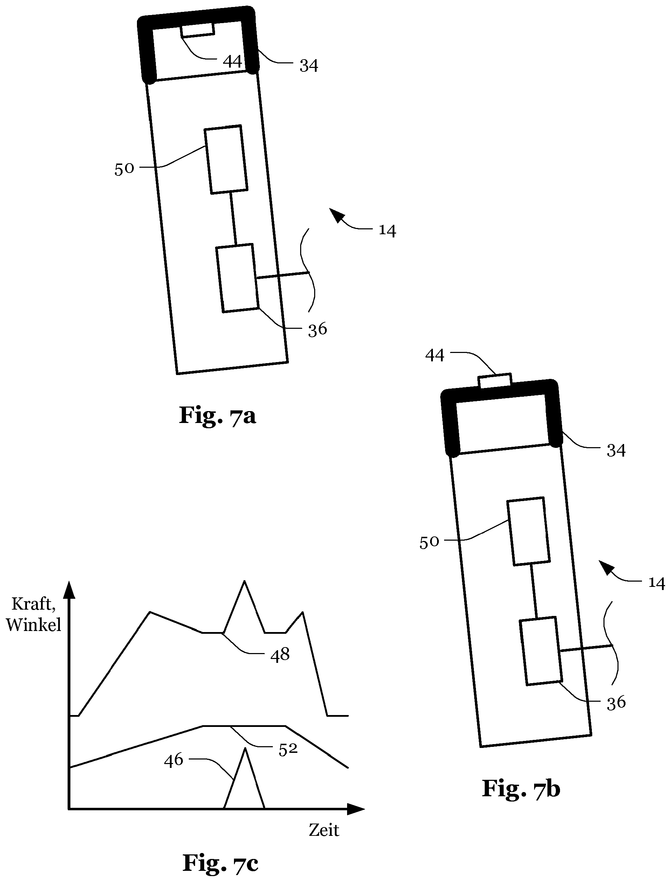

Fig. 7a eine weitere mögliche Abwandlung der in Fig. 1-4 gezeigten Steuereinheiten;
Fig. 7b eine weitere mögliche Abwandlung der in Fig. 1-4 gezeigten Steuereinheiten;
Fig. 7c eine mögliche Verwendung der in Fig. 7a und 7b gezeigten abgewandelten Steuereinheiten;

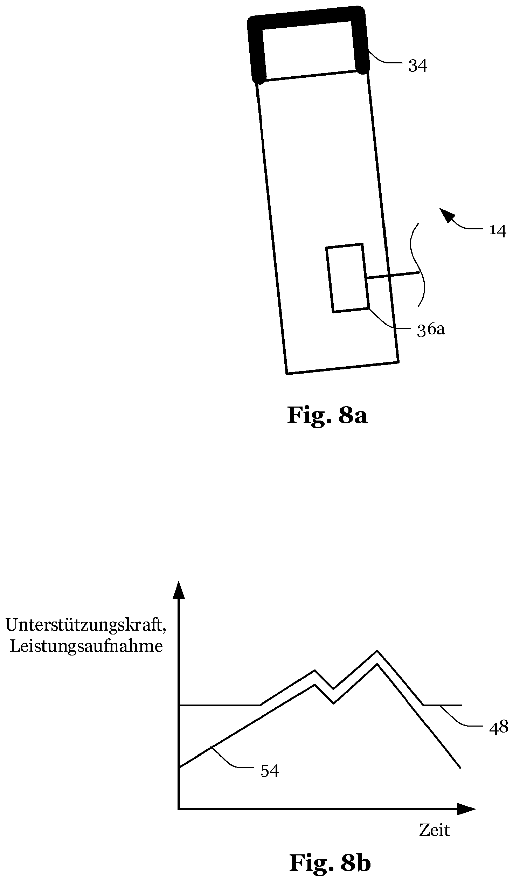

Fig. 8a eine weitere mögliche Abwandlung der in Fig. 1-7b gezeigten Steuereinheiten;
Fig. 8b eine mögliche Verwendung der in Fig. 8a gezeigten abgewandelten Steuereinheit;

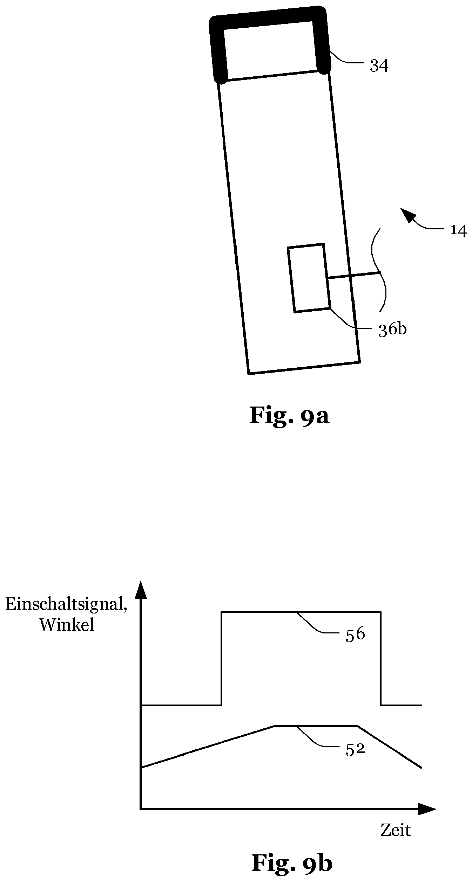

Fig. 9a eine weitere mögliche Abwandlung der in Fig. 1-8a gezeigten Steuereinheiten;
Fig. 9b eine mögliche Verwendung der in Fig. 9a gezeigten abgewandelten Steuereinheit;

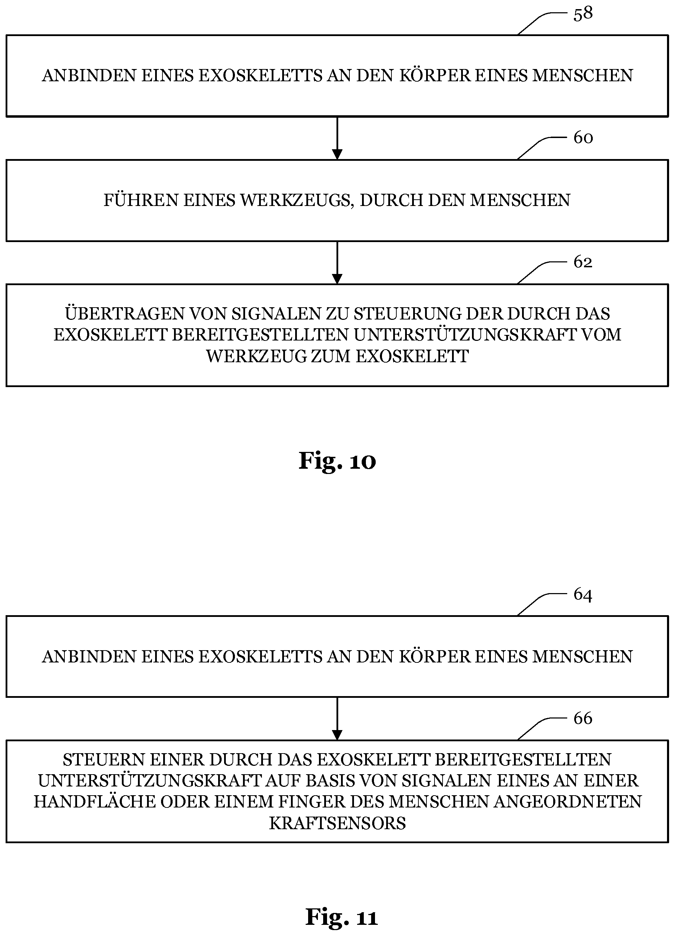

Fig. 10 ein Ablaufdiagramm eines ersten Verfahrens; und
Fig. 11 ein Ablaufdiagramm eines zweiten Verfahrens zeigt.

Dabei sind in den Zeichnungen gleiche und funktional ähnliche Elemente durch gleiche (bzw. ähnliche) Bezugszeichen gekennzeichnet. Jedoch versteht es sich, dass nicht notwendigerweise alle Elemente in allen Zeichnungen gezeigt sind und dass die gezeigten Elemente nicht notwendigerweise maßstabsgetreu dargestellt sind.

### DETAILLIERTE BESCHREIBUNG

Fig. 1 zeigt ein System 10 umfassend ein Exoskelett 12 und ein Werkzeug 14. Das Exoskelett 12 weist eine Vielzahl von aneinander angereihten rigiden Bauteilen 16 auf. Die rigiden Bauteile 16 sind durch Verbindungselemente, wie z. B. Gelenke 18 oder Führungen 20 miteinander verbunden. Das Exoskelett 12 kann in mehrere Abschnitte unterteilt sein, welche in ihrer Beweglichkeit entsprechenden Abschnitten des menschlichen Körpers nachempfunden sind. Das in Fig. 1 gezeigte Exoskelett 12 ist bspw. in einen Basis-Abschnitt 22 und einen Arm-Abschnitt 24 untergliedert, welche durch einen Schulter-Abschnitt 26 miteinander verbunden sind.

Der Basis-Abschnitt 22 umfasst ein erstes Exoskelett-Bauteil 16a mit einer Führung 20a, welche eingerichtet ist, ein zweites Exoskelett-Bauteil 16b des Basis-Abschnitts 22 entlang einer gekrümmten Trajektorie relativ zum ersten Exoskelett-Bauteil 16a zu führen. Bspw. können die Exoskelett-Bauteile 16 des Basis-Abschnitts 22 in ihrer Bewegung einem oder mehreren Wirbeln eines Benutzers (nicht gezeigt) nachempfunden sein. Das Exoskelett 12 kann ferner einen oder mehrere Sensoren (bspw. Potentiometer, Drehraten-/Beschleunigungssensoren, Empfänger zum Empfangen von Signalen zur Triangulation, etc.) zum Bestimmen der Absolut-/Relativpositionen/- ausrichtungen der Exoskelett-Bauteile 16 des Basis-Abschnitts 22 umfassen.

Der Arm-Abschnitt 24 umfasst ein drittes Exoskelett-Bauteil 16c, welches gelenkig mit einem vierten Exoskelett-Bauteil 16d verbunden ist. Bspw. können die Exoskelett-Bauteile 16 des Arm-Abschnitts 24 in ihrer Bewegung dem Ober- und Unterarm des Benutzers nachempfunden sein. Ferner ist ein Exoskelett-Bauteil 16d des Arm-Abschnitts 24 gelenkig mit dem Schulter-Abschnitt 26 verbunden, der seinerseits mittels einer Führung 20b mit einem Exoskelett-Bauteil 16e des Basis-Abschnitts 22 verbunden ist. Das Exoskelett 12 kann zudem einen oder mehrere Sensoren (bspw. Potentiometer, Drehraten-/Beschleunigungssensoren, etc.) zum Bestimmen der Absolut-/Relativpositionen/-ausrichtungen der Exoskelett-Bauteile 16 des Arm-Abschnitts 24 umfassen.

Basis-Abschnitt 22, Arm-Abschnitt 24 und Schulter-Abschnitt 26 weisen jeweils ein oder mehrere rigide oder flexible Anbindungselemente 28 (bspw. Gurte) auf, die im Hüft-/Schambeinbereich bzw. am Arm-/Schulter-/Brustbereich des Benutzers anliegen bzw. diesen (teilweise) umgreifen oder umschließen. Die Anbindungselemente 28 sind typischerweise (auf unterschiedliche Benutzer) einstellbar, indem ihre Relativposition zueinander anpassbar bzw. ihr Umfang verstellbar ist. Der Schulter-Abschnitt 26 kann ferner einen oder mehrere Sensoren (bspw. Potentiometer, Drehraten-/Beschleunigungssensoren etc.) zum Bestimmen der Relativpositionen/- ausrichtungen des Basis-Abschnitts 22 und des Arm-Abschnitts 24 zueinander umfassen.

Das Exoskelett 12 umfasst ferner einen Antrieb 30 mit einem Stromnetzanschluss oder einem Energiespeicher (bspw. einer oder mehreren Primär- oder Sekundärzellen oder einem oder mehreren Drucklufttanks) und eine Antriebssteuerung 32, welche eingerichtet sind, die Relativposition einiger oder aller rigiden Exoskelett-Bauteile 16 zueinander zu steuern, wodurch eine Stütz-, Halte- oder Kraftübertragungsfunktion hinsichtlich des menschlichen Körpers des Benutzers vorgenommen werden kann. Der Antrieb 30 kann bspw. einen oder mehrere elektrische Motoren (evtl. in Kombination mit Zugelementen) oder Ventile (in Kombination mit pneumatischen Zylindern) umfassen, deren Kraftentfaltung bzw. deren Zustand durch die Antriebssteuerung 32 gesteuert wird.

Das Werkzeug 14 kann vom Benutzer des Exoskeletts 12 zum Verrichten einer Tätigkeit (bspw. dem Einwirken auf ein Objekt) verwendet werden, während der das Werkzeug 14 in einer oder beiden Händen des Benutzers gehalten und durch den Benutzer geführt wird. Das Werkzeug 14 umfasst einen oder mehrere Griffe 34 (bspw. einen oder mehrere runde, mit einem flexiblen Material versehene Abschnitte, wie bspw. einem gummierten Pistolengriff) zum Führen des Werkzeugs 14 und eine Steuereinheit 36, welche eingerichtet ist, Steuerbefehle hinsichtlich des Zustands bzw. das Verhaltens des Exoskeletts 12 und insbesondere hinsichtlich der durch das Exoskelett 12 bereitgestellten Unterstützungskraft, an die Antriebssteuerung 32 bzw. den oder die Antriebe 30 des Exoskeletts 12 zu übertragen.

Der Griff 34 des Werkzeugs 14 kann mit einem oder mehreren mittels der Finger des Benutzers beim Führen des Werkzeugs 14 betätigbaren Bedienelementen 44 versehen sein, bspw. einer Taste und/oder einem Schalter. Bspw. können durch Betätigen der Bedienelemente 44 die Leistungsaufnahme oder eine Geschwindigkeit eines Werkzeugelements oder eine Betriebsart des Werkzeugs 14 gesteuert werden. Z. B. kann der Griff 34 eine in den Griff 34 versenkbare Taste aufweisen, wobei das Werkzeug 14 durch das Drücken der Taste gesteuert wird.

Wie in Fig. 1 gezeigt, ist das Werkzeug 14 als ein vom Exoskelett 12 unabhängig betreibbares Gerät ausgebildet und weist bspw. eine eigene Energieversorgung (bspw. umfassend eine oder mehrere Primär- oder Sekundärzellen oder einen Stromnetzanschluss) auf. Insbesondere ist das Werkzeug 14 frei von mechanischen Verbindungen zum Exoskelett 12 so dass es durch den Benutzer ohne mechanische Einschränkung relativ zum Exoskelett 12 geführt werden kann.

Fig. 1a zeigt eine Abwandlung des in Fig. 1 gezeigten Systems 10, welches sich von dem in Fig. 1 gezeigten System 10 dadurch unterscheidet, dass das System 10 anstatt oder zusätzlich zum Werkzeug 14 einen Kraftsensor 36-1 aufweist, welcher zur Anordnung an einer Handfläche oder einem Finger des Menschen vorgesehen ist, und die Unterstützungskraft 48 auf Basis von Messwerten des Kraftsensors 36-1 gesteuert wird. Bspw. kann der Kraftsensors 36-1 an einem flexiblen Material befestigt sein, welches über einen Finger oder die Hand des Benutzers gestülpt werden kann (z. B. ein Handschuh).

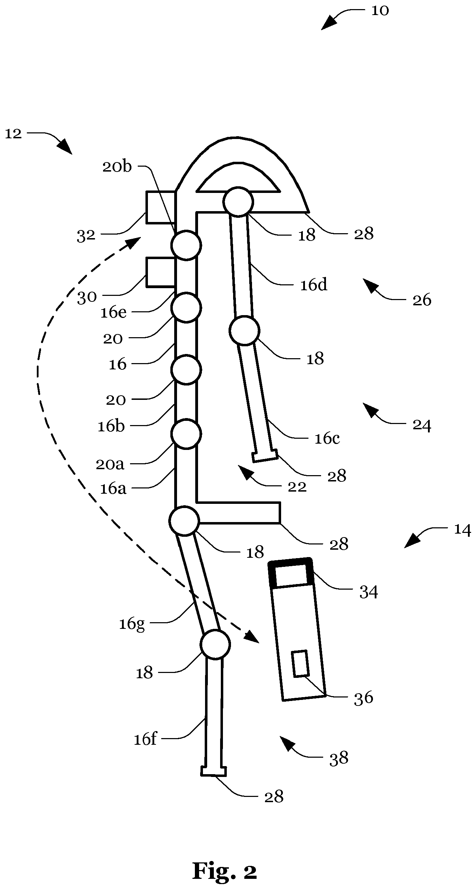

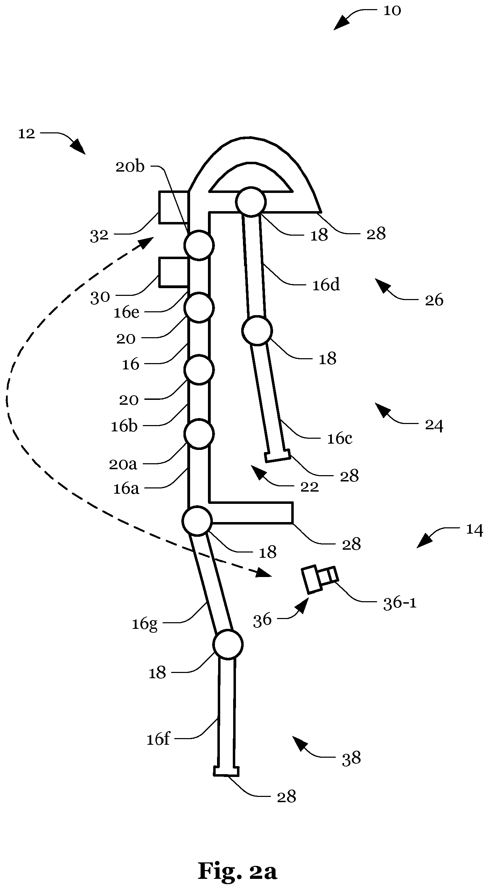

Fig. 2 und 2a zeigen Abwandlungen der in Fig. 1 und 1a gezeigten Systeme 10, welche sich von den in Fig. 1 und 1a gezeigten Systemen 10 dadurch unterscheiden, dass das Exoskelett 12 zusätzlich einen Bein-Abschnitt 38 aufweist. Der Bein-Abschnitt 38 umfasst ein fünftes Exoskelett-Bauteil 16f, welches gelenkig mit einem sechsten Exoskelett-Bauteil 16g verbunden ist. Bspw. können die Exoskelett-Bauteile 16 des Bein-Abschnitt 38 in ihrer Bewegung dem Ober- und Unterschenkel des Benutzers nachempfunden sein. Ferner ist ein Exoskelett-Bauteil 16g des Bein-Abschnitt 38 gelenkig mit dem Basis-Abschnitt 22 verbunden. Das Exoskelett 12 kann zudem einen oder mehrere Sensoren zum Bestimmen der Absolut-/Relativpositionen/-ausrichtungen der Exoskelett-Bauteile 16 des Bein-Abschnitts 38 umfassen.

Obwohl nicht gezeigt, können die in Fig. 1, 1a, 2, und 2a gezeigten Exoskelette 12 auch zusätzlich einen Kopf-Abschnitt aufweisen und die Exoskelette 12 zudem einen oder mehrere Sensoren (bspw. Potentiometer, Drehraten-/Beschleunigungssensoren etc.) zum Bestimmen der Absolut-/Relativpositionen/-ausrichtungen der Exoskelett-Bauteile des Kopf-Abschnitts umfassen. Der oder die Sensoren des Exoskeletts 12 können dann zu einer teilweisen oder vollständigen Bestimmung der Pose des Exoskeletts 12 bzw. des Benutzers verwendet werden, wobei die Daten hinsichtlich der bestimmten Pose zusammen mit den Steuerbefehlen in die Anpassung der Unterstützungskraft einfließen können.

Ferner können die Daten hinsichtlich der Pose verwendet werden, um das Werkzeug 14 in Situationen, in denen ein Benutzer eine ungünstige Haltung eingenommen hat oder droht die Kontrolle über das Werkzeug 14 zu verlieren, abzuschalten. Des Weiteren können die Daten hinsichtlich der Pose verwendet werden, eine Aktivierung des Werkzeugs 14 nur dann zu erlauben, wenn keine Überlastung des Exoskeletts 12 bzw. des Benutzers droht bzw. das Werkzeug 14 zu deaktivieren, wenn eine Überlastung des Exoskeletts 12 bzw. des Benutzers droht.

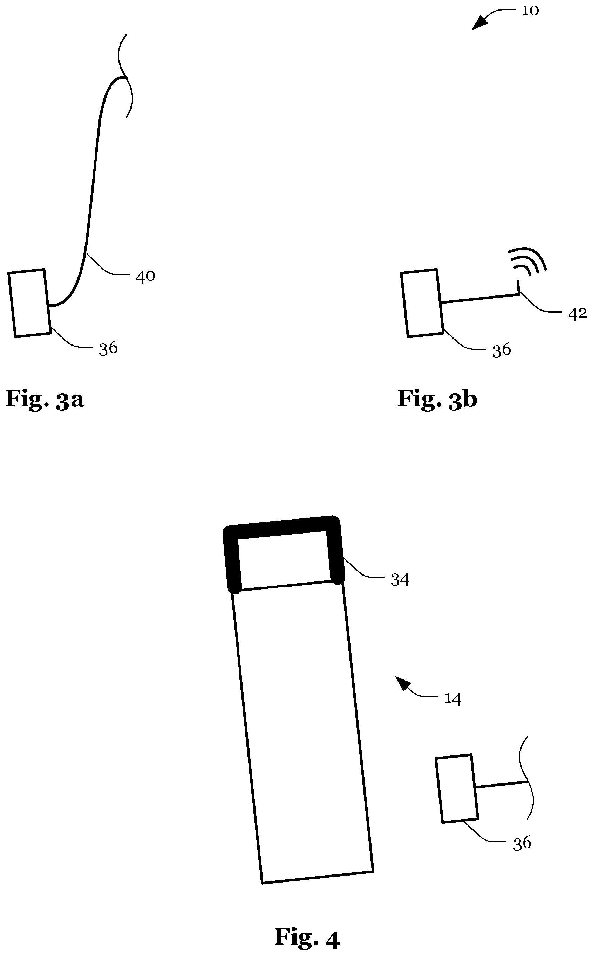

Wie in Fig. 3a und 3b gezeigt, können die Steuerbefehle kabelbasiert oder mittels Funk (bspw. über Bluetooth Low Energy) an die Antriebssteuerung 32 des Exoskeletts 12 übertragen werden. Bspw. kann die Steuereinheit 36 eine Datenschnittstelle zum Anschluss eines Datenkabels 40 oder einer Antenne 42 aufweisen. Ferner versteht es sich, dass zu Erhöhung der Ausfallsicherheit und zur Aufdeckung von Übertragungsfehlern anstatt einer Schnittstelle 36 und einem Kabel 40 bzw. einer Antenne 42 mehrere Schnittstellen, Kabel 40 oder Antennen 42 vorgesehen sein können. Zudem können mehrere Schnittstellen und Kabel 40 vorgesehen sein, um mehrere Werkzeuge 14 parallel bzw. ohne das Umstecken von Kabeln 40 im Wechsel verwenden zu können.

Wie in Fig. 4 gezeigt, kann die Steuereinheit 36 vom Werkzeug 14 lösbar sein. Bspw. kann die Steuereinheit 36 vor Verwendung mit dem Gehäuse des Werkzeug 14 verbunden werden (bspw. eingeschoben oder aufgerastet werden) und nach der Verwendung von dem Gehäuse des Werkzeugs 14 entfernt werden. Ferner kann das Werkzeug 14 eine Schnittstelle aufweisen, durch welche die Steuereinheit 36 mit Energie und Werkzeugdaten gespeist werden kann. Bspw. können eine oder mehrere Steuereinheiten 36 einem bestimmten Exoskelett 12 bzw. einem bestimmten Benutzer zugeordnet sein (und auf das Exoskelett 12 bzw. den Benutzer abgestimmte Steuerbefehle oder eine auf das Exoskelett 12 bzw. den Benutzer abgestimmte Konfiguration aufweisen).

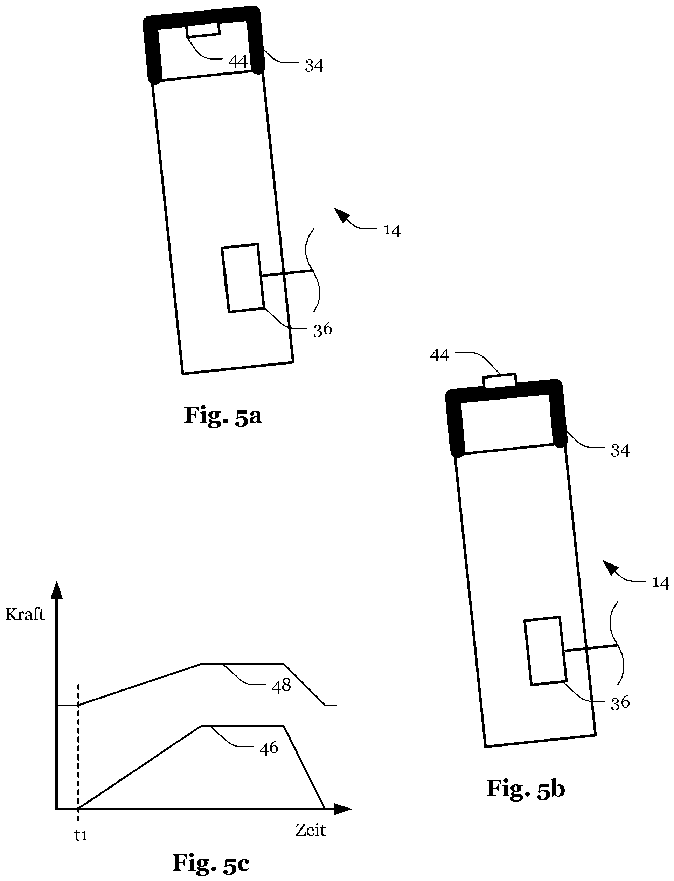

Fig. 5a und Fig. 5b zeigen am Griff 34 des Werkzeugs angeordnete Bedienelemente 44 der Steuereinheit 36, bspw. Taster mit integriertem Kraftsensor. Die Bedienelemente 44 können selbsthaftend sein und dadurch an einer für den Benutzer günstigen Position angebracht werden. Bspw. kann ein Bedienelement 44, wie in Fig. 5a gezeigt, so am Griff 34 angeordnet sein, dass es beim Führen des Werkzeugs 14 mit einem oder mehreren Fingern betätigt werden kann. Ferner kann ein Bedienelement 44, wie in Fig. 5b gezeigt, so am Griff 34 angeordnet sein, dass es beim Führen des Werkzeugs 14 mit der Handfläche betätigt werden kann.

Fig. 5c illustriert beispielhaft eine mögliche Verwendung der in Fig. 5a und 5b gezeigten Bedienelemente 44, wenn diese als Taster mit integriertem Kraftsensor ausgeführt sind. Dabei wird die Betätigungskraft 46 gemessen und auf Basis der gemessenen Betätigungskraft 46 eine durch das Exoskelett 12 bereitgestellte Unterstützungskraft 48 angepasst. So stellt das Exoskelett 12 vor Betätigen des Tasters zum Zeitpunkt 11 eine Unterstützungskraft 48 bereit (die null sein kann), welche durch Betätigen des Tasters in Abhängigkeit von der Betätigungskraft 46 vergrößert wird.

Die Vergrößerung der Unterstützungskraft 48 kann bspw. mittels eines in den Steuerbefehlen kodierten Vergrößerungsfaktors bewirkt werden. Alternativ kann die Vergrößerung der Unterstützungskraft 48 mittels Übertragen eines Indikators hinsichtlich der gemessenen Betätigungskraft 46 bewirkt werden, wobei die Vergrößerung der Unterstützungskraft 48 durch die Antriebssteuerung 32 auf Basis der empfangenen Daten erfolgt. Ferner kann die Vergrößerung der Unterstützungskraft 48 davon abhängen, ob die gemessene Betätigungskraft 46 einen bestimmten Schwellenwert überschreitet bzw. die Vergrößerung der Unterstützungskraft 48 unterbleiben, wenn die gemessene Betätigungskraft 46 einen bestimmten Schwellenwert nicht überschreitet.

Fig. 6a zeigt eine mit einer Schnittstelle der Steuereinheit 36 verbundene Sensoreinheit 50, welche es erlaubt, die Position und/oder Ausrichtung des Werkzeugs 14 relativ zu einem (erdfesten) Koordinatensystem (bspw. WGS84) zu verfolgen, z. B. unter Verwendung eines Sensordatenfusion-Algorithmus (z. B. eines Kalman-Filter-Algorithmus, etc.). Die Sensoreinheit 50 kann dabei, wie in Fig. 6a gezeigt, in das Werkzeug 14 integriert bzw. an dem Werkzeug 14 befestigt sein (bspw. eine inertiale Messeinheit), oder vom Werkzeug 14 beabstandet angeordnet sein (bspw. ein (Stereo-) Kamerasystem).

Fig. 6b illustriert beispielhaft eine mögliche die Verwendung der in Fig. 6a gezeigten Sensoreinheit 50 während einer über dem Kopf des Benutzers auszuführenden Tätigkeit, bei der eine Werkzeugachse vertikal auszurichten ist. Dabei wird aus den Sensordaten ein Winkel 52 zwischen der Werkzeugachse und der Horizontalen gemessen bzw. errechnet, wodurch bestimmt werden kann, wann der Benutzer das Werkzeug 14 aufnimmt bzw. ob der Benutzer über Kopf arbeitet. Dies ermöglicht es, die Unterstützungskraft 48 bei Aufnahme des Werkzeugs 14 zum Zeitpunkt 11 in Abhängigkeit von der Ausrichtung des Werkzeugs 14 anzupassen.

Dabei kann, wie in Fig. 6b gezeigt, die Unterstützungskraft 48 mit zunehmendem Winkel zuerst vergrößert und dann wieder reduziert werden, wobei ein Maximum der Unterstützungskraft 48 bei einem Winkel unter 90°, d. h. beim Hochschwenken des Werkzeugs 14 bereitgestellt wird. Ferner kann, wie in Fig. 6c gezeigt, die Unterstützungskraft 48 in Abhängigkeit von der Verwendungsdauer des Werkzeugs 14 angepasst werden, d. h. mit zunehmender Verwendungsdauer des Werkzeugs 14 vergrößert werden, um einen Ermüdungseffekt seitens des Benutzers zu kompensieren.

Wie in Fig. 7a und 7b gezeigt, können die in Fig. 5a und 5b gezeigten Bedienelemente 44 mit der in Fig. 6a gezeigten Sensoreinheit 50 kombiniert werden. Dabei kann bspw., wie in Fig. 7c gezeigt, die Unterstützungskraft 48 auf Basis der gemessenen/berechneten Position und/oder Ausrichtung des Werkzeugs 14 und der Betätigung eines Bedienelements 44 angepasst werden, wobei durch Betätigen des Bedienelements 44 zusätzliche Unterstützungskraft 48 bereitgestellt wird.

Allerdings versteht es sich, dass neben der gezeigten Kombinationsmöglichkeit eine Vielzahl an weiteren Kombinationsmöglichkeiten vorgesehen sein kann und zudem vorgesehen sein kann, dass der Benutzer je nach Bedarf aus unterschiedlichen Betriebsmodi auswählen kann. Bspw. kann in einem weiteren oder alternativen Betriebsmodus die Unterstützungskraft 48 auf Basis der gemessenen/berechneten Position und/oder Ausrichtung des Werkzeugs 14 angepasst werden, wenn das Bedienelement 44 nicht betätigt wird und auf Basis der Betätigung eines Bedienelements 44 angepasst werden, wenn das Bedienelement 44 betätigt wird.

Zudem können, wie in Fig. 8a und 8b gezeigt, Betriebszustandsparameter wie bspw. die Leistungsaufnahme 54 (oder ein Anpressdruck, Drehmoment, etc.) des Werkzeugs 14 durch die Steuereinheit 36a überwacht werden und in die Anpassung der Unterstützungskraft 48 einfließen. Dabei kann, wie in Fig. 8b gezeigt, die Unterstützungskraft 48 ab Überschreiten einer Leistungsaufnahmeschwelle in Abhängigkeit von der Leistungsaufnahme 54 erhöht werden. Die Anpassung der Unterstützungskraft 48 in Abhängigkeit von einem oder mehreren Betriebszustandsparametern, wie der Leistungsaufnahme 54, kann dabei einen eigenständigen Betriebsmodus darstellen oder mit beliebigen der vorhergehenden Faktoren (bspw. zu einem regelbasierten Steueralgorithmus) kombiniert werden.

Insbesondere können, wie in Fig. 9a und 9b gezeigt, Betriebszustandsparameter, wie bspw. die Position und/oder Ausrichtung des Werkzeugs 14 (evtl. in Kombination mit Daten hinsichtlich der Pose) genutzt werden, eine (versehentliche) Aktivierung des Werkzeugs 14 zu unterbinden bzw. das Werkzeug automatisch zu aktivieren, wenn sich das Werkzeug 14 an einer bestimmten Position und/oder in einer bestimmten Ausrichtung (und das Exoskelett 12 in einer zur Verrichtung der Tätigkeit gewünschten Pose) befindet.

Bspw. kann die Steuereinheit 36b Daten hinsichtlich der Pose, in der sich das Exoskelett 12 befindet, empfangen und das Einschalt-Signal 56 auf Basis der empfangenen Daten erzeugen, wenn eine gewünschte Pose eingenommen wurde. Alternativ kann die Steuereinheit 36b eingerichtet sein, ein Einschalt-Signal 56 zu empfangen, wenn die gewünschte Pose eingenommen wurde. Wenn das Einschalt-Signal 56 vorliegt und sich das Werkzeug 14 an einer bestimmten Position und/oder in einer bestimmten Ausrichtung befindet, kann die Steuereinheit 36b das Werkzeug 14 automatisch aktivieren oder das Werkzeug 14 zur manuellen Aktivierung freigeben. Ferner kann das Werkzeug 14 automatisch abgeschaltet werden, wenn eine der zur Aktivierung notwendigen Bedingungen nicht mehr vorliegt.

Fig. 10 zeigt ein Ablaufdiagramm eines erfindungsgemäßen Verfahrens. Das Verfahren beginnt mit dem Schritt 58 des Anbindens des Exoskeletts 12 an den Körper des Benutzers. Wenn der Benutzer in Schritt 60 das Werkzeug 14 führt, welches frei von mechanischen Verbindungen zum Exoskelett ist, werden in Schritt 62 Signale zu Steuerung der durch das Exoskelett 12 bereitgestellten Unterstützungskraft 48 vom Werkzeug 14 zur Antriebssteuerung 32 des Exoskeletts 12 übertragen, welche den oder die Antriebe 30 unter Berücksichtigung der Signale steuert.

Fig. 11 zeigt ein Ablaufdiagramm eines weiteren erfindungsgemäßen Verfahrens. Das Verfahren beginnt mit dem Schritt 64 des Anbindens des Exoskeletts 12 an den Körper des Benutzers und umfasst einen Schritt 66 des Steuerns der durch das Exoskelett 12 bereitgestellten Unterstützungskraft 48 auf Basis von Signalen eines an einer Handfläche oder einem Finger des Menschen angeordneten Kraftsensors 36-1.

### BEZUGSZEICHENLISTE

- 10: System
- 12: Exoskelett
- 14: Werkzeug
- 16: Bauteil (Exoskelett)
- 18: Gelenk (Exoskelett)
- 20: Führung (Exoskelett)
- 22: Basis-Abschnitt (Exoskelett)
- 24: Arm-Abschnitt (Exoskelett)
- 26: Schulter-Abschnitt (Exoskelett)
- 28: Anbindungselemente (Exoskelett)
- 30: Antrieb (Exoskelett)
- 32: Antriebssteuerung (Exoskelett)
- 34: Griff (Werkzeug)
- 36: Steuereinheit
- 36-1: Kraftsensor
- 38: Bein-Abschnitt (Exoskelett)
- 40: Kabel
- 42: Antenne
- 44: Bedienelemente (Werkzeug)
- 46: Betätigungskraft
- 48: Unterstützungskraft
- 50: Sensoreinheit
- 52: Winkel
- 54: Leistungsaufnahme
- 56: Einschalt-Signal
- 58-66: Prozessschritte

## Patentansprüche

1. System (10) zur Muskelkraftunterstützung, umfassend:
ein Exoskelett (12), welches eingerichtet ist, während der Verwendung des Systems (10) an den Körper eines Menschen angebunden zu sein; und
ein Werkzeug (14), welches eingerichtet ist, während der Verwendung des Systems (10) durch den Menschen geführt zu werden;
wobei das Werkzeug (14) eine Steuereinheit (36) zur Steuerung einer während der Verwendung des Systems (10) durch das Exoskelett (12) bereitgestellten Unterstützungskraft (48) aufweist
**dadurch gekennzeichnet, dass**
das Werkzeug (14) frei von mechanischen Verbindungen zum Exoskelett (12) ist.

2. System (10) nach Anspruch 1, wobei die Steuereinheit (36) mit einer Sensoreinheit (50) zur Messung
einer Relativposition, -ausrichtung, -geschwindigkeit, und/oder -beschleunigung zwischen dem Werkzeug (14) und dem Exoskelett (12), und/oder einer Position, Ausrichtung, Geschwindigkeit, und/oder Beschleunigung des Werkzeugs (14) in einem ortsfesten Koordinatensystem verbunden ist; und
die Unterstützungskraft (48) auf Basis der gemessenen Werte gesteuert wird.

3. System (10) nach Anspruch 1, wobei die Steuereinheit (36) eingerichtet ist, die Unterstützungskraft zu steuern, während das Werkzeug (14) in Verwendung ist, insbesondere wenn ein Motor des Werkzeugs (14) in Betrieb ist.

4. System nach Anspruch 3, wobei die Steuereinheit (36) einen Kraftsensor aufweist und die Unterstützungskraft (48) auf Basis von Messwerten des Kraftsensors gesteuert wird.

5. System (10) nach Anspruch 4, wobei der Kraftsensor in einen Taster integriert ist und die Unterstützungskraft (48) auf Basis von Messwerten des Kraftsensors gesteuert wird, wenn der Taster gedrückt wird.

6. System (10) nach einem der Ansprüche 1 bis 5, wobei die Steuereinheit (36) eingerichtet ist, einen Betriebszustand des Werkzeugs (14) zu überwachen und die Unterstützungskraft (48) auf Basis des Betriebszustands zu steuern.

7. System (10) nach Anspruch 6, wobei die Steuereinheit (36) eingerichtet ist, die Unterstützungskraft (48) auf Basis einer Leistungsaufnahme (54) des Werkzeugs (14) und/oder durch das Werkzeug (14) erzeugter Kräfte zu steuern.

8. System (10) nach einem der Ansprüche 1 bis 7, wobei die Steuereinheit (36) eingerichtet ist, Steuersignale zur Steuerung der Unterstützungskraft (48) mittels Funks an das Exoskelett (12) zu übertragen.

9. System (10) nach einem der Ansprüche 1 bis 8, wobei das Exoskelett (12) eingerichtet ist, ein Einschalt-Signal (56) an das Werkzeug (14) zu übertragen, wenn der Zustand des Exoskeletts (12) eine oder mehrere erste Bedingungen erfüllt und/oder ein Ausschalt-Signal an das Werkzeug (14) zu übertragen, wenn der Zustand des Exoskeletts (12) eine oder mehrere zweite Bedingungen erfüllt.

10. Verfahren zur Unterstützung der Muskelkraft, umfassend:
Anbinden (58) eines Exoskeletts (12) an den Körper eines Menschen;
Führen (60) eines Werkzeugs (14), durch den Menschen; und
Übertragen (62) von Signalen zu Steuerung der durch das Exoskelett (12) bereitgestellten Unterstützungskraft vom Werkzeug (14) zu einer Antriebssteuerung (32) oder einem Antrieb (30) des Exoskeletts (12)
**dadurch gekennzeichnet, dass**
das Werkzeug (14) frei von mechanischen Verbindungen zum Exoskelett (12) ist.

## Claims

1. System (10) for assisting muscle strength, comprising:
an exoskeleton (12) which is configured to be attached to the body of a human during use of the system (10), and
a tool (14) which is configured to be guided by the human during use of the system (10);
wherein the tool (14) has a controller (36) for controlling an assistive force (48) provided by the exoskeleton (12) during use of the system (10),
**characterised in that**
the tool (14) does not have any mechanical connections to the exoskeleton (12).

2. System (10) according to claim 1, wherein the controller (36) is connected to a sensor unit (50) for measuring
a relative position, orientation, speed, and/or acceleration between the tool (14) and the exoskeleton (12), and/or a position, orientation, speed, and/or acceleration of the tool (14) in a stationary coordinate system; and
the assistive force (48) is controlled on the basis of the measured values.

3. System (10) according to claim 1, wherein the controller (36) is configured to control the assistive force while the tool (14) is in use, in particular when a motor of the tool (14) is in operation.

4. System according to claim 3, wherein the controller (36) has a force sensor and the assistive force (48) is controlled on the basis of measured values of the force sensor.

5. System (10) according to claim 4, wherein the force sensor is integrated into a button and the assistive force (48) is controlled on the basis of measured values of the force sensor when the button is pressed.

6. System (10) according to any one of claims 1 to 5, wherein the controller (36) is configured to monitor an operating state of the tool (14) and to control the assistive force (48) on the basis of the operating state.

7. System (10) according to claim 6, wherein the controller (36) is configured to control the assistive force (48) on the basis of a power consumption (54) of the tool (14) and/or forces generated by the tool (14).

8. System (10) according to any one of claims 1 to 7, wherein the controller (36) is configured to transmit control signals for controlling the assistive force (48) to the exoskeleton (12) by radio.

9. System (10) according to any one of claims 1 to 8, wherein the exoskeleton (12) is configured to transmit a switch-on signal (56) to the tool (14) when the state of the exoskeleton (12) meets one or more first conditions and/or to transmit a switch-off signal to the tool (14) when the state of the exoskeleton (12) meets one or more second conditions.

10. Method for assisting muscle strength, comprising:
attaching (58) an exoskeleton (12) to the body of a human;
guiding (60) of a tool (14), by the human; and
transmitting (62) signals for controlling the assistive force provided by the exoskeleton (12) from the tool (14) to a drive controller (32) or a drive (30) of the exoskeleton (12),
**characterised in that**
the tool (14) does not have any mechanical connections to the exoskeleton (12).

## Revendications

1. Système (10) destiné à soutenir la force musculaire, comprenant :
un exosquelette (12) qui est conçu pour être attaché au corps d'un humain pendant l'utilisation du système (10) ; et
un outil (14) qui est conçu pour être guidé à travers l'humain pendant l'utilisation du système (10) ;
dans lequel l'outil (14) présente une unité de commande (36) destinée à la commande d'une force de soutien (48) fournie par le biais de l'exosquelette (12) pendant l'utilisation du système (10)
**caractérisé en ce que**
l'outil (14) est exempt de liaisons mécaniques à l'exosquelette (12).

2. Système (10) selon la revendication 1, dans lequel l'unité de commande (36) est reliée à une unité de détection (50) destinée à la mesure
d'une position, orientation, vitesse et/ou accélération relative entre l'outil (14) et l'exosquelette (12) et/ou d'une position, orientation, vitesse et/ou accélération de l'outil (14) dans un système de coordonnées fixes ; et
la force de soutien (48) est commandée sur la base des valeurs mesurées.

3. Système (10) selon la revendication 1, dans lequel l'unité de commande (36) est conçue pour commander la force de soutien pendant que l'outil (14) est en cours d'utilisation, en particulier si un moteur de l'outil (14) est en service.

4. Système selon la revendication 3, dans lequel l'unité de commande (36) présente un détecteur de force et la force de soutien (48) est commandée sur la base de valeurs de mesure du détecteur de force.

5. Système (10) selon la revendication 4, dans lequel le détecteur de force est intégré dans un bouton et la force de soutien (48) est commandée sur la base de valeurs de mesure du détecteur de force lorsque le bouton est enfoncé.

6. Système (10) selon l'une quelconque des revendications 1 à 5, dans lequel l'unité de commande (36) est conçue pour surveiller un état de fonctionnement de l'outil (14) et commander la force de soutien (48) sur la base de l'état de fonctionnement.

7. Système (10) selon la revendication 6, dans lequel l'unité de commande (36) est conçue pour commander la force de soutien (48) sur la base d'une consommation électrique (54) de l'outil (14) et/ou de forces générées par le biais de l'outil (14).

8. Système (10) selon l'une quelconque des revendications 1 à 7, dans lequel l'unité de commande (36) est conçue pour transmettre des signaux de commande à l'exosquelette (12) pour la commande de la force de soutien (48) par radio.

9. Système (10) selon l'une quelconque des revendications 1 à 8, dans lequel l'exosquelette (12) est conçu pour transmettre un signal d'activation (56) à l'outil (14) si l'état de l'exosquelette (12) remplit une ou plusieurs premières conditions et/ou pour transmettre un signal de désactivation à l'outil (14) si l'état de l'exosquelette (12) remplit une ou plusieurs secondes conditions.

10. Procédé destiné au soutien de la force musculaire, comprenant :
le fait d'attacher (58) un exosquelette (12) au corps d'un humain ;
le guidage (60) d'un outil (14) par l'humain ; et
la transmission (62) de signaux pour la commande de la force de soutien fournie par le biais de l'exosquelette (12) de l'outil (14) à une commande d'entraînement (32) ou un entraînement (30) de l'exosquelette (12)
**caractérisé en ce que**
l'outil (14) est exempt de liaisons mécaniques à l'exosquelette (12).
